(19)

Europäisches
Patentamt
European
Patent Office
Office européen
des brevets

(11) **EP 3 515 114 A1**

(12) **EUROPEAN PATENT APPLICATION**
published in accordance with Art. 153(4) EPC

(43) Date of publication:
**24.07.2019 Bulletin 2019/30**

(21) Application number: **17850021.1**

(22) Date of filing: **14.04.2017**

(51) Int Cl.:
***H04W 36/00*** (2009.01)

(86) International application number:
**PCT/CN2017/080562**

(87) International publication number:
**WO 2018/049815 (22.03.2018 Gazette 2018/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.09.2016 CN 201610822753**

(71) Applicant: **ZTE Corporation
Shenzhen, Guangdong 518057 (CN)**

(72) Inventor: **LIU, Meng
Shenzhen
Guangdong 518057 (CN)**

(74) Representative: **Regimbeau
20, rue de Chazelles
75847 Paris Cedex 17 (FR)**

(54) **METHOD AND DEVICE FOR DIVIDING NUMBER OF SIGNAL GRIDS**

(57) Provided are a method and device for dividing the number of signal bars. The method includes: acquiring a current lowest signal value that ensures a terminal is accessed to a network and a minimum value of radio frequency sensitivity of the terminal; determining a correction value according to the current lowest signal value and the minimum value of radio frequency sensitivity; and according to the correction value and a range of a received signal strength indication (RSSI) in a signal standard of the terminal, determining the range of the RSSI corresponding to the number of signal bars displayed by the terminal. Through the technical solution, the problem in the related art that a fixed range of the RSSI corresponding to the number of signal bars in the signal standard leads to the number of signal bars directly disconnecting from the network from three or two grids at certain positions where it is easy to disconnect from the network.

Acquire a current lowest signal value that ensures a terminal is accessed to a network and a minimum value of radio frequency sensitivity of the terminal — S302

Determine a correction value according to the current lowest signal value and the minimum value of radio frequency sensitivity — S304

According to the correction value and a range of a received signal strength indication (RSSI) in a signal standard of the terminal, determine the range of the RSSI corresponding to the number of signal bars displayed by the terminal — S306

**FIG. 3**

## Description

### TECHNICAL FIELD

The present disclosure relates to communications and, in particular, to a method and device for dividing the number of signal bars.

### BACKGROUND

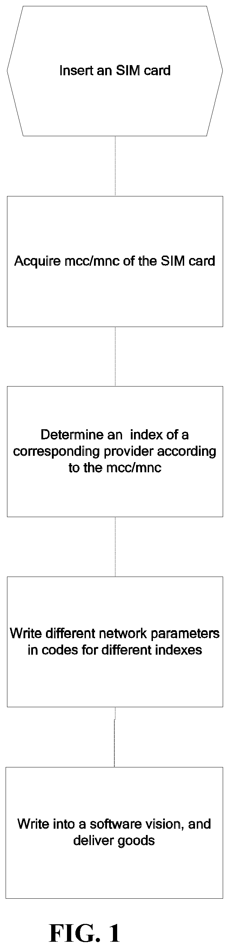

An existing terminal (such as, a mobile phone) has a provider self-adaption scheme. When different subscriber identification module (SIM) cards are inserted, a modem side is matched to different providers and an index of the provider is reported. After the index of the provider is reported to a framework side through an interface function qcril, a corresponding signal standard of the provider is acquired according to the indexes of different providers, so as to match signal standards of different providers for different providers, as shown in FIG. 1.

For the signal standard, in channel projects in North America, signal strength standards of each provider are different. However, our North American baseline signal standard is defined according to the standards of American Telephone and Telegraph Company (ATT). Because the standard is too strict, when a front testing personnel compares our prototype with prototypes of Samsung, LG and other manufacturers, our prototype signal is relatively poor. To re-establish the standard not only requires the approval of high-level leaders, but also requires the cooperation of the front personnel, requirements engineers, test engineers and R&D engineers, which is very troublesome.

Therefore, in the related art, a terminal has only one set of signal standard. A range of a received signal strength indication (RSSI) corresponding to signal bars in each set of signal standard is fixed and will not change. What's more, the terminal selects the signal standard according to specific requirements of the provider without considering the current state of the network. As a result, at certain positions where it is easy to disconnect from a network, the terminal directly disconnects from the network when there are three or two signal bars, thereby affecting the user experience.

### SUMMARY

Embodiments of the present disclosure provide a method and device for dividing the number of signal bars to at least solve the following problem in the related art: since a range of a received signal strength indication (RSSI) corresponding to the number of signal bars in a signal standard is fixed, the terminal directly disconnects from the network at certain positions where it is easy to disconnect from a network when there are three or two signal bars.

According to an embodiment of the present disclosure, a method for dividing the number of signal bars is provided. The method includes: acquiring a current lowest signal value that ensures a terminal is accessed to a network and a minimum value of radio frequency sensitivity of the terminal; determining a correction value according to the current lowest signal value and the minimum value of radio frequency sensitivity; and according to the correction value and a range of an RSSI in a signal standard of the terminal, determining the range of the RSSI corresponding to the number of signal bars displayed by the terminal.

Optionally, the acquiring a current lowest signal value that ensures a terminal is accessed to a network includes: determining an operating network type of the terminal, and acquiring the current lowest signal value that ensures the terminal is accessed to the network according to a cell selection criterion corresponding to the operating network type.

Optionally, the acquiring the current lowest signal value that ensures the terminal is accessed to the network includes at least one of: the operating network type includes a global system for mobile communications (GSM) or a wideband code division multiple access (WCDMA), and the acquiring the current lowest signal value that ensures the terminal is accessed to the network includes: acquiring a minimum reception level at which the terminal is allowed to access a cell where the terminal resides; and the operating network type includes a long-term evolution (LTE), and the acquiring the current lowest signal value that ensures the terminal is accessed to the network includes: acquiring a minimum signal strength of the cell where the terminal resides.

Optionally, the determining a correction value according to the current lowest signal value and the minimum value of radio frequency sensitivity includes: determining a difference value between the current lowest signal value and the minimum value of radio frequency sensitivity, and determining the difference value as the correction value.

Optionally, the according to the correction value and a range of an RSSI in a signal standard of the terminal, determining the range of the RSSI corresponding to the number of signal bars displayed by the terminal includes: by summing the correction value and a boundary value of the range of the RSSI in the signal standard corresponding to the operating network type of the terminal, determining the range of the RSSI corresponding to the number of signal bars displayed by the terminal.

According to another embodiment of the present disclosure, a device for dividing the number of signal bars is provided. The device includes: an acquisition module configured to acquire a current lowest signal value that ensures a terminal is accessed to a network and a minimum value of radio frequency sensitivity of the terminal; a first determination module configured to determine a correction value according to the current lowest signal value and the minimum value of radio frequency sensitivity; and a second determination module configured to, according to the correction value and a range of an RSSI in a signal standard of the terminal, determine the range of the RSSI corresponding to the number of signal bars displayed by the terminal.

Optionally, the acquisition module is further configured to determine an operating network type of the terminal, and acquire the current lowest signal value that ensures the terminal is accessed to the network according to a cell selection criterion corresponding to the operating network type.

Optionally, the operating network type includes a GSM or a WCDMA, and the acquisition module is further configured to acquire a minimum reception level at which the terminal is allowed to access a cell where the terminal resides; or the operating network type includes an LTE, and the acquisition module is further configured to acquire a minimum signal strength of the cell where the terminal resides.

Optionally, the first determination module is further configured to determine a difference value between the current lowest signal value and the minimum value of radio frequency sensitivity, and determine the difference value as the correction value.

Optionally, the second determination module is further configured to, by summing the correction value and a boundary value of the range of the RSSI in the signal standard corresponding to the operating network type of the terminal, determine the range of the RSSI corresponding to the number of signal bars displayed by the terminal.

According to another embodiment of the present disclosure, a storage medium is further provided.

The storage medium is configured to store program codes for executing following steps: acquiring a current lowest signal value that ensures a terminal is accessed to a network and a minimum value of radio frequency sensitivity of the terminal; determining a correction value according to the current lowest signal value and the minimum value of radio frequency sensitivity; and according to the correction value and a range of an RSSI in a signal standard of the terminal, determining the range of the RSSI corresponding to the number of signal bars displayed by the terminal.

Optionally, the storage medium is further configured to store program codes for executing following steps: the acquiring a current lowest signal value that ensures a terminal is accessed to a network includes: determining an operating network type of the terminal, and according to a cell selection criterion corresponding to the operating network type, acquiring the current lowest signal value that ensures the terminal accesses to the network. Optionally, the storage medium is further configured to store program codes for executing following steps: the acquiring the current lowest signal value that ensures the terminal is accessed to the network includes at least one of: the operating network type includes a GSM or a WCDMA, and the acquiring the current lowest signal value that ensures the terminal is accessed to the network includes: acquiring a minimum reception level at which the terminal is allowed to access a cell where the terminal resides; and the operating network type includes an LTE, and the acquiring the current lowest signal value that ensures the terminal accesses to the network includes: acquiring a minimum signal strength of the cell where the terminal resides.

Optionally, the storage medium is further configured to store program codes for executing following steps: the according to the current lowest signal value and the minimum value of radio frequency sensitivity, determining a correction value includes: determining a difference value between the current lowest signal value and the minimum value of radio frequency sensitivity, and determining that the difference value is the correction value.

Optionally, the storage medium is further configured to store program codes for executing following steps: the according to the correction value and a range of an RSSI in a signal standard of the terminal, determining the range of the RSSI corresponding to the number of signal bars displayed by the terminal includes: by summing the correction value and a boundary value of the range of the RSSI in the signal standard corresponding to the operating network type of the terminal, determining the range of the RSSI corresponding to the number of signal bars displayed by the terminal.

According to the present disclosure, a current lowest signal value that ensures a terminal is accessed to a network and a minimum value of radio frequency sensitivity of the terminal are acquired; a correction value is determined according to the current lowest signal value and the minimum value of radio frequency sensitivity; and according to the correction value and a range of a received signal strength indication (RSSI) in a signal standard of the terminal, the range of the RSSI corresponding to the number of signal bars displayed by the terminal is determined. Since both the correction value determined by the current lowest signal value that ensures the terminal is accessed to the network and the range of the RSSI in the signal standard of the terminal are used to determine the range of the RSSI corresponding to the number of signal bars displayed by the terminal, so that the range of the RSSI corresponding to the number of signal bars displayed by the terminal is dynamically adapted according to the current state of the network, instead of simply matching the number of signal bars according to a fixed signal value in the signal standard. Therefore, the following problem in the related art may be solved, thereby improving the user experience and enhancing user confidence in the product: since a range of a received signal strength indication (RSSI) corresponding to the number of signal bars in a signal standard is fixed, the terminal directly disconnects from the network at certain positions where it is easy to disconnect from a network when there are three or two signal bars.

**BRIEF DESCRIPTION OF DRAWINGS**

The drawings described herein are used to provide a further understanding of the present disclosure and form a part of the present application. The exemplary embodiments and descriptions thereof in the present disclosure are used to explain the present disclosure and not to limit the present disclosure in any improper way. In the drawings:

FIG. 1 is a schematic diagram of a provider self-adaption scheme in the related art;

FIG. 2 is a block diagram of a hardware structure of a base station implementing a method for dividing the number of signal bars according to an embodiment of the present disclosure;

FIG. 3 is a flowchart of a method for dividing the number of signal bars according to an embodiment of the present disclosure;

FIG. 4 is a preferable flowchart of a method for dividing the number of signal bars according to an embodiment of the present disclosure; and

FIG. 5 is a block diagram of a device for dividing the number of signal bars according to an embodiment of the present disclosure.

**DETAILED DESCRIPTION**

Hereinafter the present disclosure will be described in detail with reference to the drawings in conjunction with embodiments. It is to be noted that if not in collision, the embodiments and features therein in the present application may be combined with each other.

It is to be noted that the terms "first", "second" and the like in the description, claims and drawings of the present disclosure are used to distinguish between similar objects and are not necessarily used to describe a particular order or sequence.

Embodiment 1

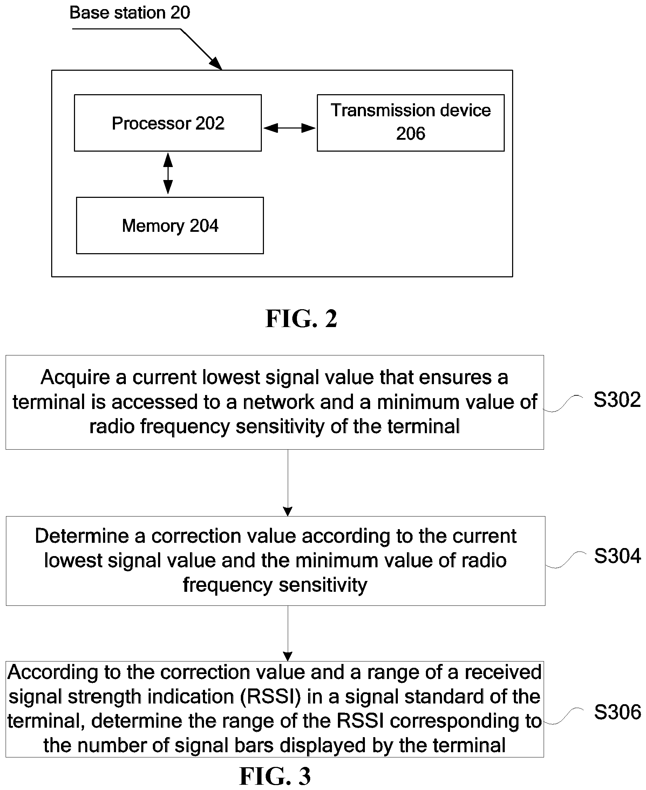

The method embodiment provided in embodiment 1 of the present application may be executed in a base station, a computer terminal or other similar computing apparatuses. In an example in which the method is executed in the base station, FIG. 2 is a block diagram of a hardware structure of a base station implementing a method for dividing the number of signal bars according to an embodiment of the present disclosure. As shown in FIG. 2, the base station 20 may include one or more (only one is shown in FIG. 2) processors 202 (in which the processor 202 may include, but is not limited to, a microprocessor such as a microcontroller unit (MCU), a programmable logic device such as a field programmable gate array (FPGA) or other processing devices), a memory 204 used for storing data, and a transmission device 206 used for implementing a communication function. It should be understood by those skilled in the art that the structure shown in FIG. 2 is merely illustrative and not intended to limit the structure of the electronic device described above. For example, the base station 20 may further include more or less components than the components shown in FIG. 2, or has a configuration different from the configuration shown in FIG. 2.

The memory 204 may be used for storing software programs and modules of application software, such as program instructions/modules corresponding to the method for dividing the number of signal bars in the embodiments of the present disclosure. The processor 202 executes the software programs and modules stored in the memory 204 so as to perform various function applications and data processing, that is, to implement the method described above. The memory 204 may include a high-speed random access memory, and may further include a nonvolatile memory, such as one or more magnetic storage devices, flash memories or other nonvolatile solid-state memories. In some examples, the memory 204 may further include memories that are remotely disposed with respect to the processor 202. These remote memories may be connected to the base station 20 via a network. Examples of the network described above include, but are not limited to, the Internet, an intranet, a local area network, a mobile communication network and a combination thereof.

The transmission device 206 is configured to receive and transmit data via a network. Specific examples of such a network may include a wireless network provided by a communication provider of the base station 20. In one example, the transmission device 206 includes a network interface controller (NIC), which may be connected to other network devices via the base station and thus be capable of communicating with the Internet. In one example, the transmission device 206 may be a radio frequency (RF) module, which is used for communicating with the Internet in a wireless way.

This embodiment provides a method for dividing the number of signal bars, which is executed in the base station described above. FIG. 3 is a flowchart of a method for dividing the number of signal bars according to an embodiment of the present disclosure. As shown in FIG. 3, the method includes steps described below.

In step S302, a current lowest signal value that ensures a terminal is accessed to a network and a minimum value of radio frequency sensitivity of the terminal are acquired.

In step S304, according to the current lowest signal value and the minimum value of radio frequency sensitivity, a correction value is determined.

In step S306, according to the correction value and a range of a received signal strength indication (RSSI) in a signal standard of the terminal, the range of the RSSI corresponding to the number of signal bars displayed by the terminal is determined.

Through the steps described above, since both the correction value determined by the current lowest signal value that ensures the terminal is accessed to the network and the range of the RSSI in the signal standard of the terminal are used to determine the range of the RSSI corresponding to the number of signal bars displayed by the terminal, the range of the RSSI corresponding to the number of signal bars displayed by the terminal is dynamically adapted according to a current state of the network, instead of simply matching the number of signal bars according to a fixed signal value in the signal standard. Therefore, the following problem in the related art may be solved, thereby improving the user experience and enhancing user confidence in the product: since a range of RSSI corresponding to the number of signal bars in a signal standard is fixed, the terminal directly disconnects from the network at certain positions where it is easy to disconnect from a network when there are three or two signal bars.

For example, a lowest signal value Qrxlevmin that ensures the terminal is accessed to the network may be determined according to system information of a system information block (SIB) acquired form the base station and a corresponding S criterion. A delta correction value may be determined according to the minimum value of radio frequency sensitivity of different terminals. The delta correction value may be added into the signal standard of the terminal to correct current display standard of the number of signal bars. In the premise of not modifying the signal standard, in which taking both a test network and the existing network into consideration, not only the test can be carried out according to the unified signal standard, but also the corrected number of signal bars can be matched according to different network environments, the user experience is improved, and the user confidence in the product is enhanced.

Optionally, the current lowest signal value that ensures the terminal is accessed to the network is acquired through: determining an operating network type of the terminal, and according to a cell selection criterion corresponding to the operating network type, acquiring the current lowest signal value that ensures the terminal is accessed to the network. Through steps described above, a more accurate current lowest signal value may be acquired.

Optionally, the acquiring the current lowest signal value that ensures the terminal is accessed to the network includes at least one of: the operating network type includes a global system for mobile communications (GSM) or a wideband code division multiple access (WCDMA), and the acquiring the current lowest signal value that ensures the terminal is accessed to the network includes: acquiring a minimum reception level at which the terminal is allowed to access a cell where the terminal resides; and the operating network type includes a long-term evolution (LTE), and the acquiring the current lowest signal value that ensures the terminal is accessed to the network includes: acquiring a minimum signal strength of the cell where the terminal resides.

Optionally, the correction value is determined according to the current lowest signal value and the minimum value of radio frequency sensitivity as follows: determining a difference value between the current lowest signal value and the minimum value of radio frequency sensitivity, and determining the difference value as the correction value.

Optionally, the range of the RSSI corresponding to the number of signal bars displayed by the terminal is determined according to the correction value and the range of the RSSI in the signal standard of the terminal as follows: determining the range of the RSSI corresponding to the number of signal bars displayed by the terminal by summing the correction value and a boundary value of the range of the RSSI in the signal standard corresponding to the operating network type of the terminal.

A detailed description of applying the above embodiment to a mobile phone is given below to facilitate the understanding of the above embodiment. The mobile phone on the market has only one set of signal standard. The number of signal bars is unified and will not change, not to mention dynamically matching the number of signal bars based on the real network. At certain positions with poor network signal conditions, the signal bars will stably stay at one bar before the mobile phone disconnects from the network in the embodiment. However, the signal bars in the related scheme does not have the stable signal or only takes one signal bar as an excessive signal before the mobile phone disconnects from the network.

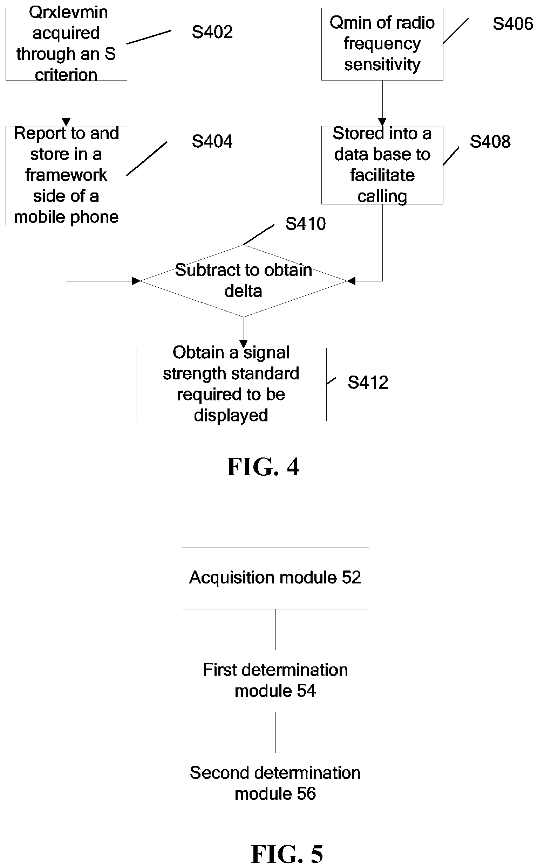

FIG. 4 is a preferable flowchart of a method for dividing the number of signal bars according to an embodiment of the present disclosure. As shown in FIG. 4, the process includes following steps.

In step 402, a network side acquires a minimum value Qrxlevmin for being resided in a network through an S criterion.

In step S404, the Qrxlevmin is reported to and stored in a framework side of a mobile phone.

In step S406, in a process of hardware radio frequency debugging, a minimum value Qmin of radio frequency sensitivity is acquired.

In step S408, the Qmin is stored into a data base to facilitate to be called.

In step S410, on the framework side, a delta value is obtained by making a subtraction on the two values.

In step S412, the delta value is added into a corresponding determination standard of the number of signal bars to correct the division of the number of signal bars.

For example, in the GSM, the signal standard is corrected by adapting the delta as follows. GSM signal standard:

| **RSSI** RSSI (dBm) | **RSSI Bars** |
|---|---|
| RSSI>-80 | 5 |
| -80≥RSSI>-89 | 4 |
| -89≥RSSI>-98 | 3 |
| -98≥RSSI>-104 | 2 |
| RSSI≤-104 | 1 |
| No service | No service |

The above table is the GSM signal standard for the North American channel project, which is established with reference to the signal standards of American Telephone and Telegraph Company (AT&T). In the above table, it can be seen that the signal standard is fixed and the signal standard is strict. Nowadays, the corrected signal standard is as follows.

| **RSSI** RSSI (dBm) | **RSSI Bars** |
|---|---|
| RSSI>-80+delta | 5 |
| -80+delta≥RSSI>-89+delta | 4 |
| -89+delta≥RSSI>-98+delta | 3 |
| -98+delta≥RSSI>-104+delta | 2 |
| RSSI≤-104+delta | 1 |
| No service | No service |

In the GSM, the correction value delta is determined as follows, the S criterion for residing in the network (3GPP TS 05.08).

For a GSM system, since a frequency division multiple address (FDMA) + time division multiple address (TDMA) system rather than a code division multiple address (CDMA) system is adapted, only one cell exists at one frequency point; otherwise, co-channel interference will appear. Therefore, after successfully scanning an effective frequency point and confirming that it is at the best frequency point, the mobile phone successfully locks a synchronous corresponding frequency point through information of a BCCH broadcast channel and demodulates an S13 required for registration. After the frequency point is determined to be a suitable cell according to the information provided by the S13, the residing process is completed. During this process, it is not necessary to search multiple cells at the frequency point and determine each cell one by one as in the WCDMA/LTE system.

The standard of the suitable residing cell given in the protocol is as follows:

a cell belongs to a selected Public Land Mobile Network (PLMN);
parameter C1 is greater than 0;
the cell is not prohibited from being accessed; and
the access level of a mobile phone is not prohibited by the cell.

The C1 mentioned in the above standard is similar to the S criterion in the process of WCDMA/LTE searching for the network and registering, and is mainly used for determining whether the signal quality of a current cell satisfies a condition of normal residing.

The parameter C1 is a path loss criterion to be selected by the cell. The C1 of a serving cell must be greater than 0 and its formula is as follows:

$$C1 = RXLEV-RXLEV\_ACCESS\_MIN-MAX((MS\_TXPWR\_MAX\_CCH-P),0) \text{ (dBm)}$$

where the RXLEV is an average level (that is, the signal strength) received by the mobile phone; the RXLEV_ACCESS_MIN is a minimum reception level at which the mobile phone is allowed to access; and MS_TXPWR_MAX_CCH is a maximum transmit power level which can be used when the mobile phone accesses the system.

According to S criterion, the signal strength of the mobile phone must reach RXLEV_ACCESS_MIN, so that delta=RXLEV_ACCESS_MIN-Qmin, where Qmin is a minimum value of radio frequency sensitivity of the mobile phone.

In another example, in the WCDMA, the signal standard is corrected by adapting the delta as follows.

WCDMA signal standard:

| **RSCP** RSCP (dBm) | **RSRP Bars** |
|---|---|
| RSCP>-80 | 5 |
| -80$\geq$RSCP>-90 | 4 |
| -90$\geq$RSCP>-100 | 3 |
| -100$\geq$RSCP>-106 | 2 |
| RSCP$\leq$-106 | 1 |
| No service | No service |

Corrected WCDMA standard:

| **RSCP** RSCP (dBm) | **RSRP Bars** |
|---|---|
| RSCP> -80 + delta | 5 |
| -80+delta$\geq$RSCP>-90+delta | 4 |
| -90+delta$\geq$RSCP>-100+delta | 3 |
| -100+delta$\geq$RSCP>-106+delta | 2 |
| RSCP$\leq$-106+delta | 1 |
| No service | No service |

In the WCDMA, the correction value delta is determined as follows, and the residing network needs to satisfy the S criterion (3GPP TS 05.08).

The cell selection standard S is defined as follows.

In a frequency division duplex (FDD) cell, the standard needs to satisfy the following two formulas:

$$Squal = Qqualmeas(Ec/Io)-Qqualmin > 0$$

$$Srxlev = Qrxlevmeas-Qrxlevmin-Pcompensation > 0$$

Squal - a quality evaluation value (dB) of cell selection , which is only used in the situation where the FDD cell uses an Ec/Io of a common pilot channel (CPICH) as a measurement value.

Srxlev - a reception level value (dB) of cell selection.

Qqualmeas - a measured cell quality value. The quality of the reception signal (in the FDD cell) is denoted by the Ec/Io (dB) of the CPICH.

Qrxlevmeas - a measured cell reception level value, which is a receive signal channel power (RSCP) value of the CPICH in the FDD cell, and is the RSCP value (dBm) of a primary common control physical channel (P-CCPCH) and the RXLEV (dBm) of the GSM in the time division duplex (TDD) cell.

Qqualmin - a minimum quality threshold (dB) required by the cell, which is only used in the FDD cell.

Qrxlevmin - a minimum reception level threshold (dBm) required by the cell.

Pcompensation-max(UE_TXPWR_MAX_RACH - P MAX, 0) (dB).

UE_TXPWR_MAX_RACH - a maximum allowed transmit power (read form a system message) on an RACH of the mobile phone (dBm).

P MAX - a maximum transmit power of the mobile phone (dBm).

The values of Qqualmin, Qrxlevmin and UE_TXPWR_MAX_RACH may be obtained from the system message 3.

If the S criterion is satisfied, the mobile phone considers the cell as a suitable cell and resides in the cell, reads other required system messages and initiates location registration process subsequently. If the S criterion is not satisfied during the calculation in a cell selection process, the mobile phone needs to acquire information of an adjacent cell by using the system message 11/12 (SIB 11/12), so as to calculate and determine whether the adjacent cell satisfies the cell selection and residing standard. If the adjacent cell satisfies the cell selection and residing standard, the mobile phone resides in the adjacent cell and continues the registration process. If all adjacent cells do not satisfy the condition, a PLMN selection and registration process is re-started.

Qrxlevmin is a minimum level value selected and accepted by the cell, and delta=Qrxlevmin-Qmin, where the Qmin is a minimum value of radio frequency sensitivity of the mobile phone. In another example, in the LTE, the signal standard is corrected by adapting the delta as follows.

LTE signal standard:

| **RSRP** RSRP (dBm) | **RSRP Bars** |
| --- | --- |
| RSRP>-85 | 5 |
| -85$\geq$RSRP>-95 | 4 |
| -95$\geq$RSRP>-105 | 3 |
| -105$\geq$RSRP>-115 | 2 |
| RSRP$\leq$-115 | 1 |
| No service | No service |

Corrected LTE signal standard:

| **RSRP** RSRP (dBm) | **RSRP Bars** |
| --- | --- |
| RSRP>-85+delta | 5 |
| -85+delta$\geq$RSRP>-95+delta | 4 |
| -95+delta$\geq$RSRP>-105+delta | 3 |
| -105+delta$\geq$RSRP>-115+delta | 2 |
| RSRP$\leq$-115+delta | 1 |
| No service | No service |

In the LTE, the correction value delta is determined as follows, and the corresponding content of the S criterion which the residing network satisfies is as follow (TS 25.331).

$$Srxlev = Qrxlevmeas - (Qrxlevmin + Qrxlevminoffset) - Pcompensation, \ Srxlev > 0.$$

Qrxlevmeas: an actually measured cell reception signal power value, which mainly refers to RSRP measured by a user equipment (UE).

Qrxlevminoffset: a function of this value is to reduce the ping-pong selection between PLMNs, and this parameter is only used when\ the UE periodically searches for a PLMN search and performs higher priority PLMN cell evaluation after registering in a VPLMN, and in other situations, the value is 0.

Qrxlevmin: a minimum value required by the signal strength, -140~-44 dBm.

Pcompensation: a compensation value greater than 0 dBm, and in a certain cell, if a maximum uplink transmit power which can be used is greater than a maximum power that the UE can transmit, the selection threshold of this cell needs to be improved. The value of Pcompensation is a max(PEMAX-PUMAX, 0), where the PEMAX denotes the maximum transmit power level when the UE performs uplink transmission, and the PUMAX denotes the maximum output power value of radio frequency of the UE.

| Srxlev | Cell Selection RX level value (dB) |
|---|---|
| Qrxlevmeas | Measured cell RX level value (RSRP) |
| Qrxlevmin | Minimum required RX level in the cell (dBm) |
| Qrxlevmino ffset | Offset to the signaled Qrxlevmin taken into account in the Srxlev evaluation as a result of a periodic search for a higher priority PLMN while resided normally in a VPLMN [5] |
| Pcompensation | max(PEMAX-PUMAX, 0) (dB) |
| PEMAX | Maximum TX power level an UE may use when transmitting on the uplink in the cell (dBm) defined as PEMAX in [TS 36.101] |
| PUMAX | Maximum RF output power of the UE (dBm) according to the UE power class as defined in [TS 36.101] |

When the cell selection or a following candidate cell R criterion sortation is performed, a target cell must satisfy Srxlev>0. The delta value is a difference value between a lowest signal value for residing in the network in the S criterion and a minimum value (provided after hardware is debugged) of radio frequency sensitivity of a sample phone, that is, delta=Qrxlevmin-Qmin. The embodiment of the present disclosure can pass a test on the test network, avoiding that the test submits false information. In the existing network, the number of signal bars may be improved by dynamically adapting according to the Qrxlevmin provided by different base stations, instead of simply matching the number of signal bars according to the fixed signal value, thereby improving the user experience and enhancing the user confidence in the product. Optionally, in the WCDMA, besides that the RSCP is corrected with delta, an ecio value may further be corrected. The ecio is a signal to noise ratio. In the signal standard of the North American providers, the signal may refer to the ecio, the principle is similar to that of the RSCP. In a similar way, in the LTE, the signal to noise ratio rssnr may be corrected with delta.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation mode. Based on this understanding, the solutions provided in the present disclosure substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device or the like) to execute the methods according to embodiments of the present disclosure.

Embodiment 2

The embodiment further provides a device for dividing the number of signal bars. The device is used for implementing the above-mentioned embodiments and preferred embodiments. What has been described will not be repeated. As used below, the term "module" may be software, hardware or a combination thereof capable of implementing predetermined functions. The apparatuses in the embodiments described below are preferably implemented by software, but implementation by hardware or by a combination of software and hardware is also possible and conceived.

FIG. 5 is a block diagram of a device for dividing the number of signal bars according to an embodiment of the present disclosure. As shown in FIG. 5, the device includes an acquisition module 52, a first determination module 54 and a second determination module 56.

The acquisition module 52 is configured to acquire a current lowest signal value that ensures a terminal is accessed to a network and a minimum value of radio frequency sensitivity of the terminal.

The first determination module 54 is connected to the acquisition module 52, and is configured to, according to the current lowest signal value and the minimum value of radio frequency sensitivity, determine a correction value.

The second determination module 56 is connected to the first determination module 54, and is configured to, according to the correction value and a range of a received signal strength indication (RSSI) in a signal standard of the terminal, determine the range of the RSSI corresponding to the number of signal bars displayed by the terminal.

Optionally, the acquisition module is further configured to determine an operating network type of the terminal, and acquire the current lowest signal value that ensures the terminal is accessed to the network according to a cell selection criterion corresponding to the operating network type.

Optionally, the operating network type includes a GSM or a WCDMA, and the acquisition module is further configured to acquire a minimum reception level at which the terminal is allowed to access a cell where the terminal resides; or the operating network type includes an LTE, and the acquisition module is further configured to acquire a minimum signal strength of the cell where the terminal resides.

Optionally, the first determination module is further configured to determine a difference value between the current lowest signal value and the minimum value of radio frequency sensitivity, and determine the difference value as the correction value.

Optionally, the second determination module is further configured to, by summing the correction value and a boundary value of the range of the RSSI in the signal standard corresponding to the operating network type of the terminal, determine the range of the RSSI corresponding to the number of signal bars displayed by the terminal.

It is to be noted that the preceding modules may be implemented by software or hardware. Implementation by hardware may, but may not necessarily, be performed in the following manner: the preceding modules are located in a same processor, or the preceding modules are located in any combination in different processors.

Embodiment 3

The embodiment of the present disclosure further provides a storage medium. Optionally, in the embodiment, the storage medium may be configured to store program codes for executing steps described below.

In step S1, a current lowest signal value that ensures a terminal is accessed to a network and a minimum value of radio frequency sensitivity of the terminal are acquired.

In step S2, according to the current lowest signal value and the minimum value of radio frequency sensitivity, a correction value is determined.

In step S3, according to the correction value and a range of a received signal strength indication (RSSI) in a signal standard of the terminal, the range of the RSSI corresponding to the number of signal bars displayed by the terminal is determined.

Optionally, the storage medium is further configured to store program codes for executing the steps described below: the current lowest signal value that ensures the terminal is accessed to the network is acquired as follows.

In step S1, an operating network type of the terminal is determined.

In step S2, according to a cell selection criterion corresponding to the operating network type, the current lowest signal value that ensures the terminal is accessed to the network is acquired. Optionally, the storage medium is further configured to store program codes for executing steps described below: the current lowest signal value that ensures the terminal is accessed to the network is acquired as follows.

In step S1, the operating network type includes a global system for mobile communications (GSM) or a wideband code division multiple access (WCDMA), and the current lowest signal value that ensures the terminal is accessed to the network is acquired in the following manner: acquiring a minimum reception level at which the terminal is allowed to access a cell where the terminal resides.

Alternatively, in step S2, the operating network type includes a long-term evolution (LTE), and the current lowest signal value that ensures the terminal is accessed to the network is acquired in the following manner: acquiring a minimum signal strength of the cell where the terminal resides.

Optionally, the storage medium is further configured to store program codes for executing the following step: the correction value is determined according to the current lowest signal value and the minimum value of radio frequency sensitivity as follows.

In step S1, a difference value between the current lowest signal value and the minimum value of radio frequency sensitivity is determined.

In step S2, it is determined that the difference value is the correction value.

Optionally, the storage medium is further configured to store program codes for executing the following step: according to the correction value and the range of the received signal strength indication (RSSI) in the signal standard of the terminal, the range of the RSSI corresponding to the number of signal bars displayed by the terminal is determined as follows.

In step S1, by summing the correction value and a boundary value of the range of the RSSI in the signal standard corresponding to the operating network type of the terminal, the range of the RSSI corresponding to the number of signal bars displayed by the terminal is determined. Optionally, in the embodiment, the storage medium described above may include, but is not limited to, a USB flash disk, a read-only memory (ROM), a random access memory (RAM), a mobile hard disk, a magnetic disk, an optical disk or another medium capable of storing program codes.

Optionally, in the embodiment, the processor executes the following steps according to the program codes stored in the storage medium: a current lowest signal value that ensures a terminal is accessed to a network and a minimum value of radio frequency sensitivity of the terminal are acquired; according to the current lowest signal value and the minimum value of radio frequency sensitivity, a correction value is determined; and according to the correction value and a range of an RSSI in a signal standard of the terminal, the range of the RSSI corresponding to the number of signal bars displayed by the terminal is determined.

Optionally, in the embodiment, the processor executes the following steps according to the program codes stored in the storage medium: the current lowest signal value that ensures the terminal is accessed to the network is acquired as follows: determining an operating network type of the terminal, and according to a cell selection criterion corresponding to the operating network type, acquiring the current lowest signal value that ensures the terminal is accessed to the network.

Optionally, in the embodiment, the processor executes the following steps according to the program codes stored in the storage medium: the current lowest signal value that ensures the terminal is accessed to the network is acquired in at least one of following steps: the operating network type includes a GSM or a WCDMA, and the current lowest signal value that ensures the terminal is accessed to the network is acquired as follows: acquiring a minimum reception level at which the terminal is allowed to access a cell where the terminal resides; or the operating network type includes an LTE, and the current lowest signal value that ensures the terminal is accessed to the network is acquired as follows: acquiring a minimum signal strength of the cell where the terminal resides.

Optionally, in the embodiment, the processor executes the following steps according to the program codes stored in the storage medium: the correction value is determined according to the current lowest signal value and the minimum value of radio frequency sensitivity as follows: determining a difference value between the current lowest signal value and the minimum value of radio frequency sensitivity, and determining the difference value as the correction value. Optionally, in the embodiment, the processor executes the following steps according to the program codes stored in the storage medium: according to the correction value and the range of the RSSI in the signal standard of the terminal, the range of the RSSI corresponding to the number of signal bars displayed by the terminal is determined as follows: by summing the correction value and a boundary value of the range of the RSSI in the signal standard corresponding to the operating network type of the terminal, determining the range of the RSSI corresponding to the number of signal bars displayed by the terminal.

Optionally, for specific examples in the embodiment, reference may be made to the examples described in the above-mentioned embodiments and optional implementation modes, and repetition will not be made herein.

Apparently, it is to be understood by those skilled in the art that each of the preceding modules or steps of the present disclosure may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatuses, so that the modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

The above are only preferred embodiments of the present disclosure and are not intended to limit the present disclosure. For those skilled in the art, the present disclosure may have various modifications and variations. Any modifications, equivalent substitutions, improvements and the like made within the spirit and principle of the present disclosure should fall within the scope of the present disclosure.

## INDUSTRIAL APPLICABILITY

The present disclosure is applicable to communications, to solve the following problem in the related art, thereby improving the user experience and enhancing user confidence in the product: since a range of a received signal strength indication (RSSI) corresponding to the number of signal bars in a signal standard is fixed, the terminal directly disconnects from the network at certain positions where it is easy to disconnect from a network when there are three or two signal bars.

**Claims**

1. A method for dividing a number of signal bars, comprising:

   acquiring a current lowest signal value that ensures a terminal is accessed to a network and a minimum value of radio frequency sensitivity of the terminal;
   determining a correction value according to the current lowest signal value and the minimum value of radio frequency sensitivity; and
   according to the correction value and a range of a received signal strength indication (RSSI) in a signal standard of the terminal, determining the range of the RSSI corresponding to the number of signal bars displayed by the terminal.

2. The method of claim 1, wherein the acquiring a current lowest signal value that ensures a terminal is accessed to a network comprises:

   determining an operating network type of the terminal; and
   according to a cell selection criterion corresponding to the operating network type, acquiring the current lowest signal value that ensures the terminal is accessed to the network.

3. The method of claim 2, wherein the acquiring the current lowest signal value that ensures the terminal is accessed to the network according to a cell selection criterion corresponding to the operating network type comprises one of the followings:

   the operating network type comprises a global system for mobile communications (GSM) or a wideband code division multiple access (WCDMA), and the acquiring the current lowest signal value that ensures the terminal is accessed to the network comprises: acquiring a minimum reception level at which the terminal is allowed to access a cell where the terminal resides; and
   the operating network type comprises a long-term evolution (LTE), and the acquiring the current lowest signal value that ensures the terminal is accessed to the network comprises: acquiring a minimum signal strength of the cell where the terminal resides.

4. The method of claim 1, wherein the determining a correction value according to the current lowest signal value and the minimum value of radio frequency sensitivity comprises:

   determining a difference value between the current lowest signal value and the minimum value of radio frequency sensitivity; and
   determining the difference value as the correction value.

5. The method of any one of claims 1 to 4, wherein the according to the correction value and a range of a received signal strength indication (RSSI) in a signal standard of the terminal, determining the range of the RSSI corresponding to the number of signal bars displayed by the terminal comprises:
   determining the range of the RSSI corresponding to the number of signal bars displayed by the terminal by summing the correction value and a boundary value of the range of the RSSI in the signal standard corresponding to the operating network type of the terminal.

6. A device for dividing a number of signal bars, comprising:

   an acquisition module configured to acquire a current lowest signal value that ensures a terminal is accessed to a network and a minimum value of radio frequency sensitivity of the terminal;
   a first determination module configured to determine a correction value according to the current lowest signal value and the minimum value of radio frequency sensitivity; and
   a second determination module configured to, according to the correction value and a range of a received signal strength indication (RSSI) in a signal standard of the terminal, determine the range of the RSSI corresponding to the number of signal bars displayed by the terminal.

7. The device of claim 6, wherein the acquisition module is further configured to: determine an operating network type of the terminal; and acquire the current lowest signal value that ensures the terminal is accessed to the network according to a cell selection criterion corresponding to the operating network type.

8. The device of claim 7, wherein
the operating network type comprises a global system for mobile communications (GSM) or a wideband code division multiple access (WCDMA), and the acquisition module is further configured to acquire a minimum reception level at which the terminal is allowed to access a cell where the terminal resides;
the operating network type comprises a long-term evolution (LTE), and the acquisition module is further configured to acquire a minimum signal strength of the cell where the terminal resides.

9. The device of claim 6, wherein the first determination module is further configured to determine a difference value between the current lowest signal value and the minimum value of radio frequency sensitivity, and determine the difference value as the correction value.

10. The device of any one of claims 6 to 9, wherein the second determination module is further configured to determine the range of the RSSI corresponding to the number of signal bars displayed by the terminal by summing the correction value and a boundary value of the range of the RSSI in the signal standard corresponding to the operating network type of the terminal.

11. A computer storage medium, wherein the computer storage medium is configured to store execution instructions for executing the method of any one of claims 1 to 5.

Insert an SIM card

Acquire mcc/mnc of the SIM card

Determine an index of a
corresponding provider according
to the mcc/mnc

Write different network parameters
in codes for different indexes

Write into a software vision, and
deliver goods

FIG. 1

Base station 20

```
┌─────────────────────────────────────────────────────┐
│                                                       │
│   ┌─────────────────────┐      ┌──────────────────┐   │
│   │                     │      │ Transmission     │   │
│   │   Processor 202     │◄────►│ device           │   │
│   │                     │      │ 206              │   │
│   └─────────────────────┘      └──────────────────┘   │
│             ▲                                          │
│             │                                          │
│             ▼                                          │
│   ┌─────────────────────┐                             │
│   │                     │                             │
│   │    Memory 204       │                             │
│   │                     │                             │
│   └─────────────────────┘                             │
│                                                       │
└─────────────────────────────────────────────────────┘
```

## FIG. 2

┌─────────────────────────────────────────────────────┐
│ Acquire a current lowest signal value that ensures a  │
│ terminal is accessed to a network and a minimum value of │  S302
│ radio frequency sensitivity of the terminal          │
└─────────────────────────────────────────────────────┘
                         │
                         ▼
┌─────────────────────────────────────────────────────┐
│ Determine a correction value according to the current │
│ lowest signal value and the minimum value of radio    │  S304
│ frequency sensitivity                                 │
└─────────────────────────────────────────────────────┘
                         │
                         ▼
┌─────────────────────────────────────────────────────┐
│ According to the correction value and a range of a received │
│ signal strength indication (RSSI) in a signal standard of the │
│ terminal, determine the range of the RSSI corresponding to │  S306
│ the number of signal bars displayed by the terminal   │
└─────────────────────────────────────────────────────┘

## FIG. 3

**FIG. 4**

Flowchart blocks:
- Qrxlevmin acquired through an S criterion — S402
- Report to and store in a framework side of a mobile phone — S404
- Qmin of radio frequency sensitivity — S406
- Stored into a data base to facilitate calling — S408
- Subtract to obtain delta — S410
- Obtain a signal strength standard required to be displayed — S412

**FIG. 5**

Blocks:
- Acquisition module 52
- First determination module 54
- Second determination module 56

<div align="center">

# INTERNATIONAL SEARCH REPORT

</div>

| | International application No. |
|---|---|
| | PCT/CN2017/080562 |

**A.   CLASSIFICATION OF SUBJECT MATTER**

<div align="center">

H04W 36/00 (2009.01) i

</div>

According to International Patent Classification (IPC) or to both national classification and IPC

**B.   FIELDS SEARCHED**

Minimum documentation searched (classification system followed by classification symbols)

<div align="center">

H04W; H04Q; H04L

</div>

Documentation searched other than minimum documentation to the extent that such documents are included in the fields searched

Electronic data base consulted during the international search (name of data base and, where practicable, search terms used)

CNPAT, CNKI, WPI, EPODOC: 信号, 格, 数, 条, 修正, 调整, 校准, 阈值, 阀值, 天线, 质量, 强度, 直方图, 步长, 等级, 动态, 自适应, 最小, 最低, 掉网, 断网, 范围, 对应, 显示, 指示, 射频, 灵敏度, 参数, RSSI, signal, table, number, bar, amendment, adjust, correction, calibration, threshold, antenna, quality, QOS, histogram, step, class, level, dynamic, adaptation, minimum, break, cut off, network, domain, parameter, zone, correspond, display, instruct, radio frequency, RF

**C.   DOCUMENTS CONSIDERED TO BE RELEVANT**

| Category* | Citation of document, with indication, where appropriate, of the relevant passages | Relevant to claim No. |
|---|---|---|
| A | CN 105577903 A (YULONG COMPUTER TELECOMMUNICATION SCIENTIFIC (SHENZHEN) CO., LTD.), 11 May 2016 (11.05.2016), description, paragraphs [0048]-[0062] | 1-11 |
| A | CN 102761896 A (LEADCORE TECHNOLOGY CO., LTD.), 31 October 2012 (31.10.2012), entire document | 1-11 |
| A | CN 101547244 A (ZTE CORP.), 30 September 2009 (30.09.2009), entire document | 1-11 |
| A | US 2011117867 A1 (USA TECHNOLOGIES, INC.), 19 May 2011 (19.05.2011), entire document | 1-11 |
| A | US 2004102167 A1 (SAMSUNG ELECTRONICS CO., LTD.), 27 May 2004 (27.05.2004), entire document | 1-11 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 June 2017 | 30 June 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHANG, Xue Telephone No. (86-10) 52871147 |
|---|---|

Form PCT/ISA/210 (second sheet) (July 2009)

## INTERNATIONAL SEARCH REPORT
### Information on patent family members

| International application No. |
| --- |
| PCT/CN2017/080562 |

| Patent Documents referred in the Report | Publication Date | Patent Family | Publication Date |
| --- | --- | --- | --- |
| CN 105577903 A | 11 May 2016 | None | |
| CN 102761896 A | 31 October 2012 | None | |
| CN 101547244 A | 30 September 2009 | None | |
| US 2011117867 A1 | 19 May 2011 | None | |
| US 2004102167 A1 | 27 May 2004 | KR 20040046071 A | 05 June 2004 |

Form PCT/ISA/210 (patent family annex) (July 2009)